# EUROPÄISCHE PATENTSCHRIFT

(11) **EP 2 207 656 B1**
(45) Veröffentlichungstag und Bekanntmachung des Hinweises auf die Patenterteilung: **30.01.2013**
(21) Anmeldenummer: 08842014.6
(22) Anmeldetag: 22.10.2008
(51) Int. Cl.: B29C 31/00, B29C 57/04, B29C 33/30

(54) **VORRICHTUNG ZUR AUSBILDUNG VON MUFFEN AN KUNSTSTOFFROHREN**
APPARATUS FOR FORMING SLEEVES ON PLASTIC PIPES
DISPOSITIF DE FORMATION DE MANCHONS SUR DES TUBES EN MATIERE SYNTHETIQUE

(30) Priorität: 24.10.2007 AT 17312007
(43) Veröffentlichungstag der Anmeldung: 21.07.2010
(73) Patentinhaber: Schnallinger, Helmuth, 94901 Nitra (SK); Schnallinger, Christian, 4382 Sarmingstein (AT)
(72) Erfinder: Schnallinger, Helmuth, 94901 Nitra (SK); Schnallinger, Christian, 4382 Sarmingstein (AT)
(74) Vertreter: Hübscher, Helmut
(86) Internationale Anmeldenummer: PCT/AT2008/000383
(87) Internationale Veröffentlichungsnummer: WO 2009/052539

(56) Entgegenhaltungen:
- DE-A1- 3 920 814
- US-A- 4 005 968
- DATABASE WPI Week 199632 Thomson Scientific, London, GB; AN 1996-317724 XP002515330 & JP 08 142187 A (SEKISUI CHEM IND CO LTD) 4. Juni 1996 (1996-06-04)
- DATABASE WPI Week 199713 Thomson Scientific, London, GB; AN 1997-140214 XP002515331 & JP 09 019960 A (SEKISUI CHEM IND CO LTD) 21. Januar 1997 (1997-01-21)
- DATABASE WPI Week 199831 Thomson Scientific, London, GB; AN 1998-356258 XP002515332 & JP 10 138338 A (SEKISUI CHEM IND CO LTD) 26. Mai 1998 (1998-05-26)

## Beschreibung

Die Erfindung bezieht sich auf eine Vorrichtung zur Ausbildung einer Muffe an einem Ende von abgelängten Kunststoffrohren mit einem Gestell, mit einem Querförderer für die Kunststoffrohre, mit wenigstens zwei entlang des Querförderers im Gestell angeordneten Einrichtungen einerseits zum Erwärmen der Rohrenden und anderseits zum Aufweiten der erwärmten Rohrenden zu einer Muffe, wobei die Einrichtungen die Rohrenden außen umgreifende Backenwerkzeuge aufweisen, die mit Hilfe von im Gestell gelagerten Stelltrieben quer zur Förderrichtung anstellbar sind, und mit wenigstens einem in das Rohrende axial einführbaren Werkzeug für zumindest eine der Einrichtungen.

Um thermoplastische Kunststoffrohre an einem Ende mit einer Muffe zu versehen, werden die zu einer Muffe aufzuweitenden Rohrenden zunächst erwärmt und dann aufgeweitet, wobei äußere Backenwerkzeuge zur Formgebung und in die Rohrenden einführbare Werkzeuge zum Aufweiten bzw. Anstauchen der erwärmten Rohrenden notwendig sind (DE 39 20 814 A1) Die Aufwärmung der Rohrenden auf die Verarbeitungstemperatur kann einstufig durchgeführt werden, erfolgt aber vorteilhaft zweistufig, und zwar bevorzugt durch eine Erwärmung von außen und von innen, was äußere Heizbacken und Heizpatronen zum Einführen in das Rohrende bedingt. Für eine Serienfertigung ist es erforderlich, die einzelnen Kunststoffrohre nacheinander den Einrichtungen für die Erwärmung und die Aufweitung zuzuführen, was einen diesen Einrichtungen zugehörigen Querförderer für die Kunststoffrohre erfordert, die bei geöffneten Backenwerkzeugen quer zu ihrer Längsachse in die jeweiligen Einrichtungen gefördert werden, bevor die Stelltriebe für diese Backenwerkzeuge, seien es Werkzeuge für die Erwärmung oder die Formgebung, beaufschlagt und die Werkzeuge für die Behandlung der Rohrenden von der Innenseite her in axialer Richtung in die Rohrenden eingeführt werden. Die Kunststoffrohre werden somit schrittweise erwärmt und zu Muffen aufgeweitet. Nachteilig bei diesen bekannten Vorrichtungen zur Muffenausbildung ist allerdings der vergleichsweise große Aufwand für eine Umrüstung auf unterschiedliche Rohr- und Muffenabmessungen. Es kann zwar zur Durchsatzsteigerung bei der Umstellung von einem großen Rohrdurchmesser auf einen kleinen Rohrdurchmesser der zur Verfügung stehende Raum dazu genützt werden, anstelle der Werkzeuge für einen großen Rohrdurchmesser Doppelwerkzeuge für je zwei Rohre mit kleinem Durchmesser vorzusehen, sodass bei annähernd gleichen Taktzeiten eine doppelte Anzahl von kleinkalibrigen Rohren mit endseitigen Muffen gefertigt werden können, doch bleibt die von Hand vorzunehmende Umrüstung aufwendig.

Um beim Formen von Muffen am Ende von Kunststoffrohren in einfacher Weise eine Umrüstung auf unterschiedliche Abmessungen vornehmen zu können, ist es außerdem bekannt (JP 10138338 A), ein neues Formwerkzeug auf einem Austauschtisch vorzubereiten und vom Austauschtisch auf einen parallelen Maschinentisch quer zur Längsrichtung des Formwerkzeugs zu verlagern, wobei das auszutauschende Formwerkzeug nach einer Längsverschiebung vom Maschinentisch auf den Austauschtisch verschoben wird. Ein solcher Werkzeugwechsel ist aber nur bei Vorrichtungen mit einer Bearbeitungsstation möglich, weil nebeneinandergereihte Bearbeitungseinrichtungen eine seitliche Auslagerung verhindern.

Der Erfindung liegt somit die Aufgabe zugrunde, eine Vorrichtung der eingangs geschilderten Art zur Ausbildung einer Muffe an einem Ende von abgelängten Kunststoffrohren so auszugestalten, dass eine rasche Umrüstung auf unterschiedliche Rohr- und Muffenabmessungen vorgenommen werden kann, ohne auf eine Mehrfachfertigung bei kleineren Rohrdimensionen verzichten zu müssen.

Die Erfindung löst die gestellte Aufgabe dadurch, dass die Einrichtungen in axialer Richtung im Gestell verschiebbar gelagerte, auswechselbare Baueinheiten bilden, die Halterungen für die von ihren Stelltrieben lösbaren Backenwerkzeuge sowie mit Ausnahme der Stelltriebe für die Backenwerkzeuge alle diesen Einrichtungen jeweils zugehörigen Werkzeuge und Antriebe umfassen.

Durch das Vorsehen von auswechselbaren Baueinheiten, die in axialer Richtung verschiebbar im Gestell gelagert sind, kann das Umrüsten der Vorrichtung auf unterschiedliche Rohr- bzw. Muffenabmessungen einfach und rasch vorgenommen werden, ohne einen übermäßigen Bauaufwand in Kauf nehmen zu müssen. Werden nämlich die Backenwerkzeuge lösbar mit ihren radialen Stelltrieben verbunden, so können diese Stelltriebe im Gestell verbleiben. Es muss lediglich für eine entsprechende Aufnahme der von ihren Stelltrieben gelösten Backenwerkzeuge in einer den einzelnen Baueinheiten zugehörigen Halterung gesorgt werden, um mit dem Wechsel der Baueinheiten die angestrebte Umrüstung sicherstellen zu können. Die einzelnen Baueinheiten können dabei der durch die größten Rohr- bzw. Muffendurchmesser vorgegebenen Gestellteilung folgen und innerhalb dieser Teilungsvorgaben Mehrfachwerkzeuge aufweisen. An der Muffenherstellung im Rahmen des jeweils eingesetzten und bestimmte Werkzeugsätze bedingenden Herstellungsverfahrens ändert sich nichts.

Obwohl die einzelnen vorinstallierten Baueinheiten je für sich auf im Gestell geführte Schlitten aufgesetzt werden könnten, ergeben sich besonders vorteilhafte Konstruktionsverhältnisse, wenn die Baueinheiten selbst als im Gestell verfahrbare Schlitten ausgebildet sind, weil in diesem Fall lediglich die Schlitten aus ihren Führungen zu entnehmen und durch Auswahlschlitten zu ersetzen sind.

Um für die Halterung der Backenwerkzeuge in den einzelnen Baueinheiten vorteilhafte Konstruktionsbedingungen zu schaffen, kann die Halterung für die Backenwerkzeuge parallel zu den Rohrachsen verschiebbar gelagerte, in Aufnahmeausnehmungen der Backenwerkzeuge eingreifende Träger aufweisen. Mit dem Vorschieben dieser Träger gegen die mit Hilfe ihrer Stelltriebe in einer vorbestimmten Obergabestellung gehaltenen Backenwerkzeuge greifen die Träger in die Aufnahmeausnehmungen der Backenwerkzeuge ein, die somit von ihren Stelltrieben gelöst und anschließend mit der jeweiligen Baueinheit aus dem Gestell gefahren werden können. Damit das Platzangebot gut genützt werden kann, empfiehlt es sich dabei, den in Richtung der Anstellung der Backenwerkzeuge gemessenen gegenseitigen Abstand der Träger dem entsprechenden Abstand der Aufnahmeausnehmungen der geschlossenen Backenwerkzeuge gleich zu wählen, sodass der Platzbedarf für die Backenwerkzeuge im Bereich der einzelnen Baueinheiten dem der geschlossenen Backenwerkzeuge entspricht.

Da die einzelnen auswechselbaren Baueinheiten mit Ausnahme der Stelltriebe für die Backenwerkzeuge alle Werkzeuge und deren Antriebe für die Rohrbehandlung enthalten, müssen diese Werkzeuge und Antriebe auch entsprechend angesteuert und mit Energie versorgt werden. Um in diesem Zusammenhang einfache Anschlussbedingungen zu schaffen, können die Baueinheiten jeweils einen mit einem dem Gestell zugehörigen Kupplungsteil zusammenwirkenden Kupplungsteil einer Steckkupplung für die Steuer- und Versorgungsleitungen der Werkzeuge und ihrer Antriebe der jeweiligen Einrichtung aufweisen. Mit Hilfe dieser Steckkupplungen können die erforderlichen Verbindungen im Bereich der Steuer- und Versorgungsleitungen automatisch vorgenommen werden. Die einzelnen Baueinheiten sind in ihrer Gebrauchsstellung innerhalb des Gestells zu verriegeln. Diese Verriegelung kann mit Vorteil über die Steckkupplungen vorgenommen werden, nämlich dann, wenn die dem Gestell zugehörigen Kupplungsteile der Steckkupplungen quer zur Verschiebeführung der Baueinheiten verstellbar gelagert und mit in Rastausnehmungen in den Kupplungsteilen der Baueinheiten eingreifende Riegelbolzen versehen sind. Mit dem Schließen der Steckkupplungen werden somit auch die Baueinheiten gegenüber dem Gestell verriegelt, sodass sich für die Festlegung der Baueinheiten im Gestell gesonderte Maßnahmen erübrigen.

Mit der Umrüstung der Einrichtungen für die Erwärmung und Aufweitung der Rohrenden für Rohre bzw. Muffen einer anderen Größe wird auch eine Anpassung des Querförderers erforderlich, mit dessen Hilfe die Rohre den einzelnen Einrichtungen nacheinander zugeführt werden. Die Anpassung dieses Querförderers an unterschiedliche Rohrabmessungen kann dann erleichtert werden, wenn der Querförderer den einzelnen Einrichtungen zugehörige, entlang einer Querführung verfahrbare Schlitten umfasst, die quer zur Querführung an die Rohre anstellbare Backenmitnehmer tragen, und wenn die Baueinheiten eine Halterung für die von ihren Stelltrieben lösbaren Backenmitnehmer aufweisen. In diesem Fall können nämlich die an die unterschiedlichen Rohrdurchmesser anzupassenden Backenmitnehmer zusammen mit der jeweiligen Einrichtung über die durch diese Einrichtung gebildete Baueinheit ausgewechselt werden. Obwohl für die Backenmitnehmer des Querförderers gesonderte Halterungen in den einzelnen Baueinheiten vorgesehen werden können, ergeben sich besonders einfache Konstruktionsverhältnisse, wenn die Träger die Backenwerkzeuge in den Aufnahmeausnehmungen durchsetzen und in Aufnahmeausnehmungen der Backenmitnehmer eingreifen. Aufgrund dieser Maßnahme können die bereits für die Backenwerkzeuge der einzelnen Einrichtungen vorgesehenen Träger auch zur Aufnahme der Backenmitnehmer des Querförderers herangezogen werden, ohne die Konstruktion der Halterung mit Hilfe der Träger wesentlich ändern zu müssen.

In der Zeichnung ist der Erfindungsgegenstand beispielsweise dargestellt. Es zeigen
- Fig. 1: eine Baueinheit für eine Einrichtung zum Aufweiten der Muffen mit den zugehörigen Gestellteilen einer erfindungsgemäßen Vorrichtung in einer aus dem Gestell ausgefahrenen Stellung in einem schematischen Schaubild,
- Fig. 2: eine schematische Seitenansicht der in der Fig. 1 dargestellten Baueinheit nach der Übernahme der Backenwerkzeuge und
- Fig. 3: eine der Fig. 2 entsprechende Darstellung der Baueinheit in der Arbeitsstellung.

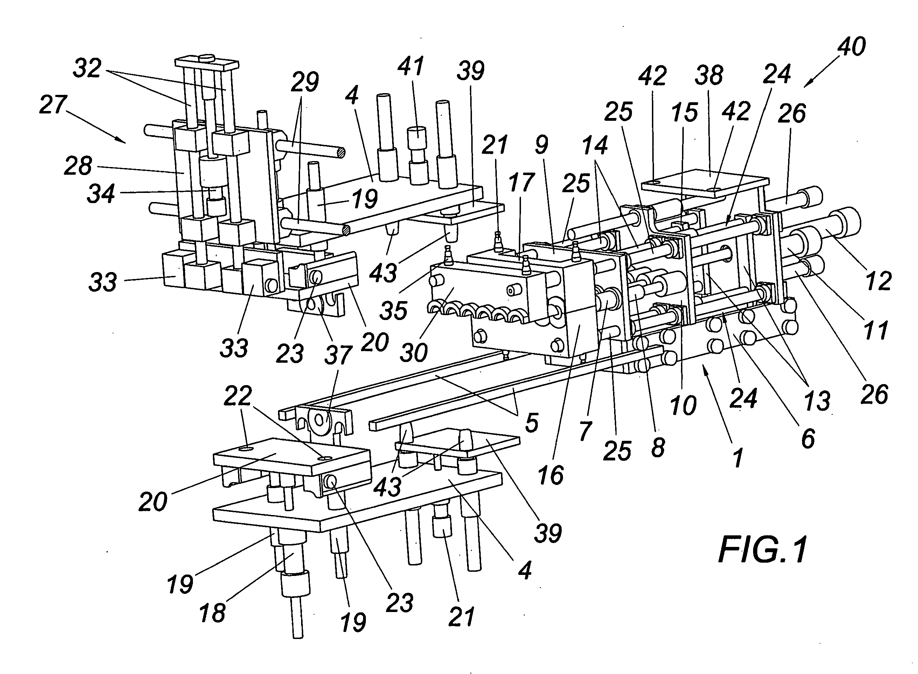

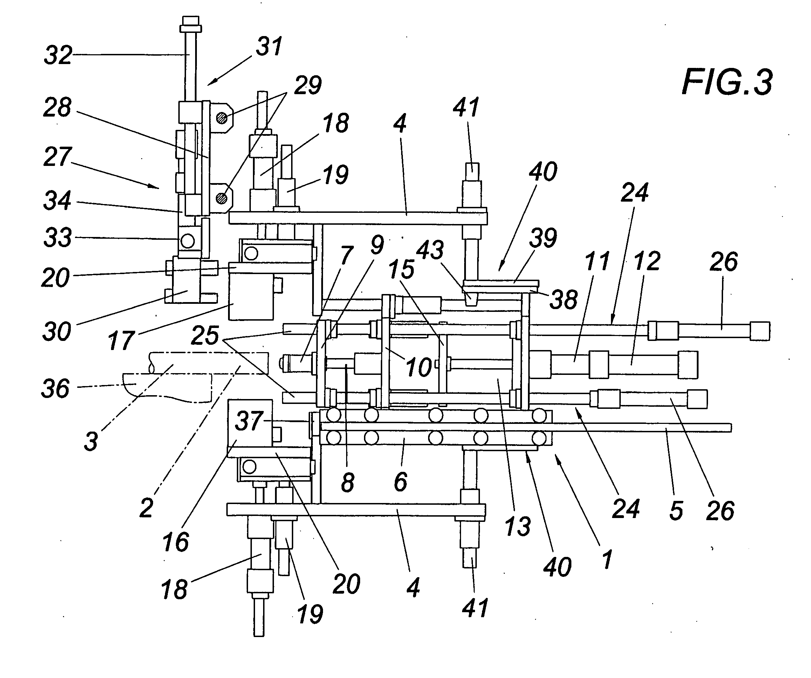

Von der lediglich im Bereich einer Baueinheit 1 für die Aufweitung der erwärmten, in der Fig. 3 strichpunktiert angedeuteten Rohrenden 2 der Kunststoffrohre 3 dargestellten Vorrichtung weist das Gestell 4 eine Verschiebeführung 5 in Form von Laufschienen für einen durch die Baueinheit 1 gebildeten Schlitten 6 auf. Auf diesem Schlitten 6 sind für die einzelnen, in einem Arbeitsgang verformbaren Kunststoffrohre 3 Werkzeuge 7, 8 zum Anstauchen bzw. Aufweiten der Rohrenden 2 zu gegenüber dem Rohrdurchmesser erweiterten Muffen axial verschiebbar gelagert. Zu diesem Zweck sind diese Werkzeuge 7, 8 auf Trägerplatten 9 und 10 aufgespannt, die je für sich mit Hilfe von Stellzylindern 11 und 12 gegenüber dem Schlitten 6 verlagert werden können. Während die Stellzylinder 11 an zwei seitlichen Jochen 13 angreifen, die über die Trägerplatte 10 durchsetzende Anker 14 verbunden sind, wie dies der Fig. 1 entnommen werden kann, greift der zwischen den Stellzylindern 11 vorgesehene Stellzylinder 12 an einem Joch 15 an, das mit der Trägerplatte 10 antriebsverbunden ist.

Neben den in axialer Richtung verstellbaren Werkzeugen 7, 8 sind der Baueinheit 1 Backenwerkzeuge 16, 17 zugeordnet, die einzelne Werkzeugbacken bilden und mit Hilfe von im Gestell 4 vorgesehenen Stelltrieben 18 beaufschlagbar sind. Zu diesem Zweck sind im Gestell 4 Führungen 19 für einander bezüglich der Rohrenden 2 radial gegenüberliegende Spannplatten 20 vorgesehen, an denen die Stelltriebe 18 angreifen und die die Backenwerkzeuge 16, 17 lösbar aufnehmen. Zu diesem Zweck sind die zu einer Handhabungseinheit zusammengefassten Backenwerkzeuge 16, 17 mit Riegelansätzen 21 versehen, die in Rastausnehmungen 22 der Spannplatten 20 eingreifen und innerhalb dieser Rastausnehmungen 22 verriegelt werden können. Die Verriegelungsantriebe sind mit 23 bezeichnet.

Damit die Backenwerkzeuge 16, 17 mit der Baueinheit 1 aus dem Gestell 4 entnommen werden können, ist die Baueinheit 1 mit einer Halterung 24 für die von den Spannplatten 20 gelösten Backenwerkzeuge 16, 17 ausgerüstet. Diese Halterung 24 besteht aus je zwei stangenartigen Trägern 25, die parallel zur Verschiebeführung. 5 verschiebbar im Schlitten 6 gelagert sind und paarweise mit Hilfe von Stellzylindern 26 beaufschlagt werden können. Die die Trägerplatten 9 und 10 verschiebbar durchsetzenden Träger 25 greifen mit ihren gegen die Backenwerkzeuge 16, 17 vorstehenden Enden in entsprechende Aufnahmeausnehmungen der Backenwerkzeuge 16, 17 ein, sodass die von den Trägern 25 aufgenommenen Backenwerkzeuge 16, 17 mit dem Schlitten 6 aus der Vorrichtung ausgefahren werden können.

Die einzelnen Kunststoffrohre 3 werden nacheinander den einzelnen nebeneinandergereihten, jeweils eine Baueinheit 1 bildenden Einrichtungen zum Erwärmen der Rohrenden 2 und zum Aufweiten der erwärmten Rohrenden 2 zu Muffen zugeführt, und zwar mit Hilfe eines Querförderers 27, der aus den einzelnen Baueinheiten 1 zugehörigen Schlitten 28 aufgebaut ist, die entlang einer Querführung 29 verfahren werden können und für die einzelnen Kunststoffrohre 3 Backenmitnehmer 30 aufweisen. Diese mit einzelnen Mitnehmerbacken für die Kunststoffrohre 3 versehenen Backenmitnehmer 30 sind lösbar mit einem Hubtrieb 31 verbunden, der aus einer Führung 32 für eine Kupplungseinrichtung 33 und einem Stelltrieb 34 besteht, sodass die über die Kupplungseinrichtung 33 mit dem Stelltrieb 34 verbundenen Backenmitnehmer 30 quer zur Querführung 29 an die Kunststoffrohre 2 radial angestellt werden können. Das Ankoppeln der Backenmitnehmer 30 an die Kupplungseinrichtung 33 erfolgt in ähnlicher Weise wie das Ankoppeln der Backenwerkzeuge 16, 17 an die Spannplatten 20 mit Hilfe von Riegelansätzen 35. Da die Kunststoffrohre 3 gemäß der Fig. 3 auf einem Tisch 36 aufruhen und auf diesem Tisch 36 mit Hilfe der angestellten Backenmitnehmer 30 verlagert werden, sind lediglich Backenmitnehmer 30 auf der dem Tisch 36 abgewandten Seite der Kunststoffrohre 3 erforderlich.

Die Träger 25 für die Backenwerkzeuge 17 auf der vom Tisch 36 abgewandten Seite der Rohrenden 2 weisen einen Hub auf, der das Vorschieben der Trägerenden durch die Backenwerkzeuge 17 hindurch bis in entsprechende Aufnahmeausnehmungen in den Backenmitnehmern 30 erlaubt. Dadurch wird es möglich, die von dem Stelltrieb 31 losgelösten Backenmitnehmer 30 ebenfalls von der Halterung 24 aufzunehmen und mit dem Schlitten 6 aus dem Gestell 4 zu fahren.

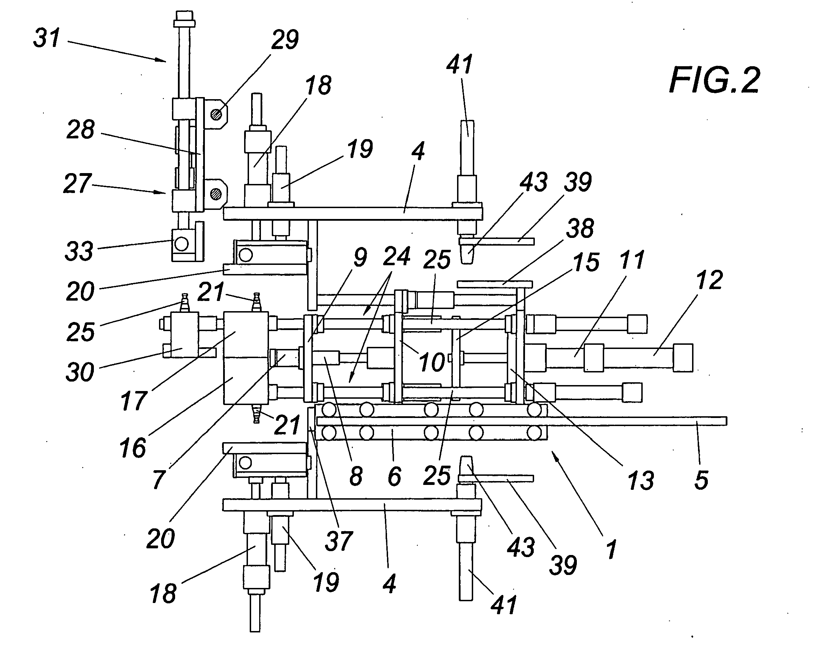

In der Fig. 1 ist eine Ausgangsstellung der Baueinheit 1 für das Einsetzen einer neuen Bearbeitungseinrichtung in das Gestell 4 dargestellt. Der Schlitten 6 mit den von der Halterung 24 getragenen Backenwerkzeugen 16, 17 und den Backenmitnehmern 30 wird in das Gestell 4 eingefahren, bis der Schlitten 6 an Anschlägen 37 abgestützt werden kann, wie dies in der Fig. 2 dargestellt ist. In der dadurch gegebenen Arbeitsstellung fluchten die einerseits der Baueinheit 1 und anderseits dem Gestell 4 zugeordneten Kupplungsteile 38 und 39 einer Steckkupplung 40 miteinander, sodass der verschiebbar im Gestell 4 geführte und mit einem Stelltrieb 41 beaufschlagbare Kupplungsteil 39 gegen den zugehörigen Kupplungsteil 38 auf der Seite der Baueinheit 1 zur Ankopplung der Steuer- und Versorgungsleitungen verlagert werden kann. Da der Kupplungsteil 39 in Rastausnehmungen 42 des Kupplungsteils 38 eingreifende Riegelbolzen 43 trägt, wird mit der Ankopplung der Steuer- und Versorgungsleitungen zwangsläufig auch der Schlitten 6 in seiner Gebrauchsstellung verriegelt. Da in der Gebrauchsstellung des Schlittens 6 bei einer entsprechenden Endlage der Stellzylinder 26 die Backenwerkzeuge 16, 17 und die Backenmitnehmer 30 gegenüber den Spannplatten 20 bzw. den Kupplungen 33 ausgerichtet gehalten werden, können durch eine entsprechende Beaufschlagung der Stelltriebe 18 und 31 die Backenwerkzeuge 16, 17 und die Backenmitnehmer 30 an die zugehörigen Stelltriebe 18 und 31 angeschlossen werden, wobei die Riegelansätze 21 der Backenwerkzeuge 16, 17 in den zugehörigen Rastausnehmungen 22 der Spannplatten 20 und die Riegelansätze 35 der Backenmitnehmer 30 in der Kupplungseinrichtung 33 verriegelt werden. Nach einem Zurückfahren der Träger 25 über die Stellzylinder 26 ist die durch die jeweilige Baueinheit gebildete Bearbeitungseinrichtung einsatzbereit, wie dies der Fig. 3 zu entnehmen ist.

Zum Wechseln der im Gestell 4 nebeneinandergereihten Baueinheiten 1, von denen lediglich eine zur Muffenherstellung gezeichnet ist, weil die anderen beispielsweise zur Erwärmung der Rohrenden dienenden Baueinheiten 1 einen grundsätzlich vergleichbaren Aufbau aufweisen, müssen in umgekehrter Reihenfolge zunächst die Backenmitnehmer 30 und die Backenwerkzeuge 16, 17 in eine vorgegebene, vorzugsweise durch die Schließstellung der Backenwerkzeuge 16, 17 gebildete Übergangsstellung verlagert werden, bevor die Backenwerkzeuge 16, 17 und die Backenmitnehmer 30 durch eine Beaufschlagung der Zylinder 26 übernommen werden können, um nach einem Öffnen der Steckkupplung 40 den Schlitten 6 aus dem Gestell 4 ausfahren zu können.

## Patentansprüche

1. Vorrichtung zur Ausbildung einer Muffe an einem Ende von abgelängten Kunststoffrohren (3) mit einem Gestell (4), mit einem Querförderer (27) für die Kunststoffrohre (3), mit wenigstens zwei entlang des Querförderers (27) im Gestell (4) angeordneten Einrichtungen einerseits zum Erwärmen der Rohrenden (2) und anderseits zum Aufweiten der erwärmten Rohrenden (2) zu einer Muffe, wobei die Einrichtungen die Rohrenden (2) außen umgreifende Backenwerkzeuge (16, 17) aufweisen, die mit Hilfe von im Gestell (4) gelagerten Stelltrieben (18) quer zur Förderrichtung anstellbar sind, und mit wenigstens einem in das Rohrende (2) axial einführbaren Werkzeug (7, 8) für zumindest eine der Einrichtungen, **dadurch gekennzeichnet, dass** die Einrichtungen auswechselbare Baueinheiten (1) bilden, die zur Auswechslung in axialer Richtung im Gestell (4) verschiebbar gelagert sind und Halterungen (24) für die von ihren Stelltrieben (18) lösbaren Backenwerkzeuge (16, 17) sowie mit Ausnahme der Stelltriebe (18) für die Backenwerkzeuge (16, 17) alle diesen Einrichtungen jeweils zugehörigen Werkzeuge (7, 8) und Antriebe (11, 12) umfassen.

2. Vorrichtung nach Anspruch 1, **dadurch gekennzeichnet, dass** die Baueinheiten (1) als im Gestell (4) verfahrbare Schlitten (6) ausgebildet sind.

3. Vorrichtung nach Anspruch 1 oder 2, **dadurch gekennzeichnet, dass** die Halterung (24) für die Backenwerkzeuge (16, 17) parallel zu den Rohrachsen verschiebbar gelagerte, in Aufnahmeausnehmungen der Backenwerkzeuge (16, 17) eingreifende Träger (25) aufweisen.

4. Vorrichtung nach Anspruch 3, **dadurch gekennzeichnet, dass** der in Richtung der Anstellung der Backenwerkzeuge (16, 17) gemessene gegenseitige Abstand der Träger (25) dem entsprechenden Abstand der Aufnahmeausnehmungen der geschlossenen Backenwerkzeuge (16, 17) gleich ist.

5. Vorrichtung nach einem der Ansprüche 1 bis 4, **dadurch gekennzeichnet, dass** die Baueinheiten (1) jeweils einen mit einem dem Gestell (4) zugehörigen Kupplungsteil (39) zusammenwirkenden Kupplungsteil (38) einer Steckkupplung (40) für die Steuer- und Versorgungsleitungen der Werkzeuge (7, 8) und ihrer Antriebe (11, 12) der jeweiligen Einrichtung aufweisen.

6. Vorrichtung nach Anspruch 5, **dadurch gekennzeichnet, dass** die dem Gestell (4) zugehörigen Kupplungsteile (39) der Steckkupplungen (40) quer zur Verschiebeführung (5) der Baueinheiten (1) verstellbar gelagert und mit in Rastausnehmungen (42) in den Kupplungsteilen (38) der Baueinheiten (1) eingreifende Riegelbolzen (43) versehen sind.

7. Vorrichtung nach einem der Ansprüche 1 bis 6, **dadurch gekennzeichnet, dass** der Querförderer (27) den einzelnen Einrichtungen zugehörige, entlang einer Querführung (29) verfahrbare Schlitten (28) umfasst, die quer zur Querführung (29) an die Kunststoffrohre anstellbare Backenmitnehmer (30) tragen, und dass die Baueinheiten (1) eine Halterung (24) für die von ihren Stelltrieben (31) lösbaren Backenmitnehmer (30) aufweisen.

8. Vorrichtung nach den Ansprüchen 3 und 7, **dadurch gekennzeichnet, dass** die Träger (25) die Backenwerkzeuge (16, 17) in den Aufnahmeausnehmungen durchsetzen und in Aufnahmeausnehmungen der Backenmitnehmer (30) eingreifen. ,

## Claims

1. Apparatus for forming a sleeve on an end of cut-to-length synthetic material pipes (3) having a frame (4), having a transverse conveyor (27) for the synthetic material pipes (3), having at least two devices disposed along the transverse conveyor (27) in the frame (4), on the one hand for heating the pipe ends (2) and on the other hand for widening the heater pipe ends (2) to form a sleeve, wherein the devices comprise jaw tools (16. 17) engaging around the pipe ends (2) on the outside, which tools can be set transverse to the conveying direction using actuators (18) mounted in the frame (4), and having at least one tool (7. 8) which can be inserted axially into the pipe end (2) for at least one of the devices, **characterised in that** the devices form replaceable structural units (I) which are mounted so as to be displaccable in the frame (4) in the axial direction for replacement purposes and include holders (24) for the jaw tools (16. 17), which can be released by their actuators (18), and all tools (7, 8) and drives (11. 12) in each case appertaining to these devices with the exception of the actuators (18) for the jaw tools (16, 17).

2. Apparatus as claimed in Claim 1, **characterised in that** the structural units (1) are formed as carriages (6) which can be moved in the frame (4).

3. Apparatus as claimed in Claim 1 or 2, **characterised in that** the holder (24) for the jaw tools (16, 17) comprises supports (25) which are mounted so as to be displaceable in parallel with the pipe axes and engage into receiving recesses in the jaw tools (16, 17).

4. Apparatus as claimed in Claim 3. **characterised in that** the mutual spaced disposition of the supports (25), as measured in the setting direction of the jaw tools (16, 17), is equal to the corresponding spaced disposition of the receiving recesses in the closed jaw tools (16. 17).

5. Apparatus as claimed in any one of Claims 1 to 4. **characterised in that** the structural units 1) in each case comprise a coupling part (38), co-operating with a coupling part (39) appertaining to the frame (4), of a plug-coupling (40) for the control and supply lines of the tools (7. 8) and their drives (11. 12) of the respective device.

6. Apparatus as claimed in Claim 5. **characterised in that** the coupling parts (39), appertaining to, the frame (4), of the plug-couplings (40) are mounted to be adjustable transverse to the displacement guide (5) of the structural units (1) and are provided with locking bolts (43) engaging into latching recesses (42) in the coupling parts (38) of the structural units (1).

7. Apparatus as claimed in any one af Claims 1 to 6, **characterised in that** the transverse conveyor (27) includes carriages (28) which appertain to the individual devices, can be moved along a transverse guide (29) and support jaw dogs (30) which can be set on the synthetic material pipes transverse to the transverse guide (29) and **in that** the structural units (1) comprise a holder (24) for the jaw dogs (30) which can be released by their actuators (31).

8. Apparatus as claimed in Claims 3 and 7, **characterised in that** the supports (25) pass through the jaw tools (16, 17) in the receiving recesses and engage into receiving recesses in the jaw dogs (30).

## Revendications

1. Dispositif de formation d'un manchon sur l'extrémité de tubes en matière synthétique (3) découpés, qui est doté d'un châssis (4), d'un convoyeur transversal (27) pour les tubes en matière synthétique (3), d'au moins deux dispositifs situés le long du convoyeur transversal (27) dans le châssis (4), d'une part, pour chauffer les extrémités (2) des tubes et d'autre part, pour élargir les extrémités (2) des tubes afin de former un manchon, les dispositifs présentant des outils à mâchoires (16, 17) enserrant l'extérieur des extrémités (2)des tubes, qui peuvent être acheminés transversalement par rapport au sens de transport à l'aide d'action-neurs (18) montés dans le châssis (4) et ayant au moins un outil (7, 8) pouvant être inséré axialement dans l'extrémité (2)des tubes pour au moins un des dispositifs, **caractérisé en ce que** les dispositifs forment des modules (1) interchangeables qui sont montés de manière à pouvoir être déplacés axialement dans le châssis (4) pour être remplacés et qui comprennent des supports (24) pour les outils à mâchoires (16, 17) qui peuvent être détachés de leurs actionneurs (18) et qui, à l'exception des actionneurs (18) des outils à mâchoires (16, 17), comprennent tous les outils (7,8) et entraînements (11, 12) spécifiques associés à ces dispositifs.

2. Dispositif selon la revendication 1, **caractérisé en ce que** les modules (1) sont réalisés sous forme de chariots (6) qui sont mobiles dans le châssis (4).

3. Dispositif selon la revendication 1 ou 2, **caractérisé en ce que** le support (24) pour les outils à mâchoires (16, 17) présente des supports (25) qui sont montés de manière à pouvoir se déplacer parallèlement aux axes des tubes et qui viennent en prise dans les cavités de logement des outils à mâchoires (16, 17):

4. Dispositif selon la revendication 3, **caractérisé en ce que** l'écartement mutuel des supports (25) mesuré dans le sens de réglage des outils à mâchoires (16, 17) est égal à l'écartement correspondant des cavités de logement des outils à mâchoires (16, 17) fermés.

5. Dispositif selon l'une quelconque des revendications 1 à 4, **caractérisé en ce que** les modules (1) ont chacun une partie d'accouplement (38) d'un accouplement à enfichage (40) pour les cordons de commande et d'alimentation des outils (7, 8) et leurs entraînements (11, 12) du dispositif respectif, partie qui fonctionne conjointement avec une partie d'accouplement (39) associée au châssis (4).

6. Dispositif selon la revendication 5, **caractérisé en ce que** les pièces d'accouplement (39) des accouplements par enfichage (40) associées au châssis (4) sont montées de manière à être réglables transversalement par rapport au guide de coulissement (5) des modules (1) et sont munies de boulons de blocage (43) qui viennent en prise dans des évidements d'arrêt (42) dans les parties d'accouplement (38) des modules (1).

7. Dispositif selon l'une quelconque des revendications 1 à 6, **caractérisé en ce que** le convoyeur transversal (27) comprend des chariots (28) qui sont associés aux dispositifs individuels et qui peuvent se déplacer le long d'un guide transversal (29) et qui supportent des entraînements de mâchoire (30), qui peuvent être réglés transversalement par rapport au guide transversal (29) sur les tubes en matière synthétique, et **en ce que** les modules (1) présentent un support (24) pour les entraînements de mâchoire (30) qui peuvent être détachés de leurs actionneurs (31).

8. Dispositif selon l'une quelconque des revendications 3 et 7, **caractérisé en ce que** les supports (25) traversent les outils à mâchoires (16, 17) dans les cavités de logement et viennent en prise dans les cavités de logement des entraînements de mâchoire (30).
